# EUROPÄISCHE PATENTANMELDUNG

(11) **EP 4 729 310 A1**
(43) Veröffentlichungstag der Anmeldung: **22.04.2026**
(21) Anmeldenummer: 25202828.7
(22) Anmeldetag: 17.09.2025
(51) Int. Cl.: B60C 11/03, B60C 11/12

(54) **LAUFSTREIFEN UND FAHRZEUGREIFEN MIT LAUFSTREIFEN**

(30) Priorität: 17.10.2024 DE 102024210053
(71) Anmelder: Continental Reifen Deutschland GmbH, 30175 Hannover (DE)
(72) Erfinder: Brockmann, Jürgen, 30175 Hannover (DE); Seng, Matthias, 30175 Hannover (DE); Berger, Christoph, 30175 Hannover (DE); Subramanian Sivanarutchelvi, Manickaraj, 30175 Hannover (DE); Brandau, Christian, 30175 Hannover (DE)
(74) Vertreter: Continental Corporation

(57) **Zusammenfassung**

Laufstreifen für einen Fahrzeugreifen, umfassend
mindestens einen von einer Lauffläche (1) begrenzten Profilblock (2), der eine Lamelle (6) umfasst,
wobei entlang der Lauffläche (1) die Lamelle (6) eine Zick-Zack-Form aufweist und jeder Zick-Zack der Zick-Zack-Form einen ersten Längsabschnitt (3) und einen zweiten Längsabschnitt (4) umfasst,
wobei der erste Längsabschnitt (3) und der zweite Längsabschnitt (4) einen ersten Winkel (11) kleiner 120° einschließen,
wobei der erste Längsabschnitt (3) und eine Längsrichtung (8) des Laufstreifens einen zweiten Winkel (12) zwischen 80° und 100° einschließen,
wobei die Lamelle (6) sich in einem Tiefenabschnitt (18) unter einem vierten Winkel (14) kleiner 90° von der Lauffläche (1) in den Profilblock (2) erstreckt.

## Beschreibung

Die Erfindung betrifft einen Laufstreifen für einen Fahrzeugreifen mit mindestens einem von einer Lauffläche begrenzten Profilblock, der eine Lamelle umfasst. Entlang der Lauffläche weist die Lamelle eine Zick-Zack-Form auf und jeder Zick-Zack der Zick-Zack-Form umfasst einen ersten Längsabschnitt und einen zweiten Längsabschnitt. Der erste Längsabschnitt und der zweite Längsabschnitt schließen einen ersten Winkel kleiner 120° ein. Der erste Längsabschnitt und eine Längsrichtung des Laufstreifens schließen einen zweiten Winkel zwischen 80° und 100° ein.

Ein Fahrzeugreifen mit einem derartigen Laufstreifen ist aus der JP 2617967 B2 bekannt. Die JP 2617967 B2 offenbart einen Fahrzeugreifen mit Lamellen auf einem Block. Jede Lamelle auf dem Block ist treppenförmig ausgebildet, indem eine Komponente in Reifenaxialrichtung mit einer Komponente in Reifenumfangsrichtung verbunden ist. Zudem ist jede Komponente in Reifenaxialrichtung länger als jede Komponente in Reifenumfangsrichtung oder jede Komponente in Reifenumfangsrichtung ist länger als jede Komponente in Reifenaxialrichtung.

Ein Fahrzeugreifen mit einem derartigen Laufstreifen ist ebenfalls aus der EP 1 215 055 B1 bekannt. Die EP 1 215 055 B1 offenbart einen Fahrzeugreifen mit einer Vielzahl von Einschnitten, die so ausgebildet sind, dass sie in der Draufsicht zumindest einen nahezu rechtwinklig treppenartigen Versatzteil aufweisen. Dabei sollen die Worte "nahezu rechtwinklig" einen Winkel zwischen 75° und 105° ansprechen.

Ein Fahrzeugreifen mit einem derartigen Laufstreifen ist ebenfalls aus der DE 10 2014 215 251 A1 bekannt. Die DE 10 2014 215 251 A1 offenbart einen Fahrzeugluftreifen mit Feineinschnittwänden, die die Form einer stufenförmigen Welle aufweisen, wobei die stufenförmige Welle einander abwechselnde Abschnitte aus Trittstufen und aus Setzstufen aufweist, wobei die Setzstufen kürzer als die Trittstufen sind.

Ein Fahrzeugreifen mit einem derartigen Laufstreifen ist ebenfalls aus der EP 2 714 432 B1 bekannt. Die EP 2 714 432 B1 offenbart einen Winterreifen mit einem Laufstreifen, dessen Blöcke mit Lamellen versehen sind, die so angeordnet sind, dass sie die Leistung des Reifens auf nassen und trockenen Oberflächen verbessern.

Die JP 3606459 B2 offenbart einen Luftreifen mit einem Profil, das eine Vielzahl von Blöcken mit einer Lamelle aufweist, die einen wellenförmigen Teil oder einen zickzackförmigen Teil enthält.

Die JP 7183747 B2 offenbart einen Fahrzeugreifen mit einem Laufflächenteil, der einen Block mit einer Lamelle umfasst.

Dem Stand der Technik ist gemeinsam, dass die offenbarten Winterreifen und Ganzjahresreifen Lamellen aufweisen, die beispielsweise eine verbesserte Haftung auf Schnee ermöglichen. Dabei werden die Lamellen typischerweise mit den Profilblöcken gleich ausgerichtet (parallele Lamellierung). Darüber hinaus haben Lamellen oft eine wellenförmige Form, beispielsweise eine Sinus- oder Zick-Zack-Form, um eine seitliche Verzahnung für eine höhere Seitensteifigkeit zu ermöglichen. Die in Umfangsrichtung des Fahrzeugreifens steiler geneigten Abschnitte der Lamelle sind jedoch weniger effektiv für die Griffigkeit in Umfangsrichtung, wie Bremsen oder Traktion in gerader Fahrtrichtung. Weitergehende Verbesserungen hinsichtlich einer stärkeren Griffigkeit bei Schnee erfolgen nicht.

Vor diesem Hintergrund liegt der Erfindung die erste technische Aufgabe zugrunde, einen Laufstreifen zur Verfügung zu stellen, der neben einer höheren Seitensteifigkeit und einer verbesserten Griffigkeit in Umfangsrichtung eine verbesserte Schneeperformance aufweist. Ferner liegt der Erfindung die zweite Aufgabe zugrunde, einen Fahrzeugreifen mit einer höheren Seitensteifigkeit, einer verbesserten Griffigkeit in Umfangsrichtung und einer verbesserten Schneeperformance zur Verfügung zu stellen.

Die erstgenannte Aufgabe wird gelöst durch einen Laufstreifen mit den Merkmalen gemäß Anspruch 1. Die zweitgenannte Aufgabe wird gelöst durch einen Fahrzeugreifen mit den Merkmalen gemäß nebengeordnetem Anspruch 10. Die Unteransprüche betreffen vorteilhafte Ausführungsformen der Erfindung.

Erfindungsgemäß ist ein Laufstreifen mit den Merkmalen nach Anspruch 1 offenbart.

Der erfindungsgemäße Laufstreifen ist zur Verwendung mit einem Fahrzeugreifen ausgebildet. In einem bestimmungsgemäßen Gebrauch des Laufstreifens mit einem Fahrzeugreifen, d.h. als Teil des Fahrzeugreifens, weist der Laufstreifen genähert die Form eines Mantels eines Kreiszylinders auf. Als separater Laufstreifen ist somit eine Länge in einer Längsrichtung des Laufstreifens gleich einer Länge entlang einer Umfangsrichtung des Fahrzeugreifens.

Der Laufstreifen weist im bestimmungsgemäßen Gebrauch mit einem Fahrzeugreifen zudem eine radial außenliegende Lauffläche auf, die mit einer Straßenoberfläche in Kontakt tritt. Die Lauffläche weist ein Reifenprofil auf, welches mindestens einen Profilblock umfasst.

Der Profilblock umfasst eine Lamelle. Im bestimmungsgemäßen Gebrauch des Laufstreifens mit einem Fahrzeugreifen weist die Lamelle eine radial außenliegende Öffnung auf, die sich beim Fahren je nach Fahrsituation schließen und wieder öffnen kann, wodurch sich die Griffigkeit des Fahrzeugreifens erhöht.

Die Lamelle weist entlang der Lauffläche eine Zick-Zack-Form auf, wobei jeder Zick-Zack der Zick-Zack-Form einen ersten Längsabschnitt und einen zweiten Längsabschnitt umfasst. D.h., die Lamelle weist eine Anzahl an Zick-Zacken auf, die miteinander verbunden sind und im Verbund einen Teil der Lamelle ausbilden. Dabei können die Zick-Zacken miteinander verrundet sein. Jeder Zick-Zack weist den ersten Längsabschnitt und den zweiten Längsabschnitt auf, wobei die ersten Längsabschnitte zueinander und die zweiten Längsabschnitte zueinander jeweils gleich ausgerichtet sind.

In jedem Zick-Zack schließen der erste Längsabschnitt und der zweite Längsabschnitt einen ersten Winkel ein. Der erste Winkel ist kleiner 120°, so dass die Lamelle eine Zick-Zack-Form mit einem stumpfen ersten Winkel, mit einem senkrechten ersten Winkel oder mit einem spitzen ersten Winkel aufweisen kann. Der erste Winkel beeinflusst zudem einen Winkel zwischen zwei angrenzenden Zick-Zacken, so dass die Lamelle je nach erstem Winkel die typische Zick-Zack-Form aufweist, beispielsweise eine langgestreckte oder eine gestauchte Zick-Zack-Form.

Der erste Längsabschnitt und eine Längsrichtung des Laufstreifens schließen einen zweiten Winkel ein. Der zweite Winkel liegt zwischen 80° und 100°. D.h., im bestimmungsgemäßen Gebrauch des Laufstreifens mit einem Fahrzeugreifen schließt der erste Längsabschnitt mit einer Umlaufrichtung des Fahrzeugreifens den zweiten Winkel zwischen 80° und 100° bzw. schließt der erste Längsabschnitt mit einer axialen Richtung des Fahrzeugreifens einen Winkel zwischen -10° und 10° ein, wobei die axiale Richtung durch die Drehachse des Fahrzeugreifens definiert ist.

Erfindungsgemäß erstreckt sich die Lamelle in einem Tiefenabschnitt unter einem vierten Winkel kleiner 90° von der Lauffläche in den Profilblock hinein. In einem bestimmungsgemäßen Gebrauch des Laufstreifens mit dem Fahrzeugreifen weist die Erstreckung des Tiefenabschnitts damit eine von einer radialen Richtung des Fahrzeugreifens abweichende Richtung auf.

Neben der höheren Seitensteifigkeit aufgrund der seitlichen Verzahnung durch die Zick-Zack-Form der Lamelle und einer verbesserten Griffigkeit in Umfangsrichtung aufgrund der Ausrichtung des ersten Längsabschnitts gegenüber der Längsrichtung des Laufstreifens führt in einem bestimmungsgemäßen Gebrauch des Laufstreifens mit einem Fahrzeugreifen das Erstrecken der Lamelle in einem Tiefenabschnitt unter den vierten Winkel kleiner 90°, insbesondere unter den vierten Winkel zwischen 80° und 60°, zu einer verbesserten Schneeperformance des Laufstreifens.

Besonders vorteilhaft ist ein Laufstreifen mit den weiteren Merkmalen gemäß Anspruch 2.

Gemäß der vorteilhaften Ausführungsform des Laufstreifens ist der erste Winkel 90°. D.h., der erste Längsabschnitt und der zweite Längsabschnitt sind senkrecht zueinander angeordnet. Die senkrechte Anordnung des ersten Längsabschnitts und des zweiten Längsabschnitts zueinander führt im bestimmungsgemäßen Gebrauch des Laufstreifens mit einem Fahrzeugreifen zu einem verbesserten Ausgleich zwischen einer höheren Seitensteifigkeit auf der einen Seite und einer verbesserten Griffigkeit in Fahrtrichtung auf der anderen Seite. Eine Änderung des ersten Winkels zu einem kleineren Wert oder zu einem größeren Wert führt zu einem schlechteren Ausgleich zwischen der Seitensteifigkeit und der Griffigkeit in Fahrtrichtung.

Der vorteilhafte Laufstreifen mit dem Merkmal des ersten Winkels gleich 90° weist in einem bestimmungsgemäßen Gebrauch mit einem Fahrzeugreifen neben der höheren Seitensteifigkeit, der verbesserten Griffigkeit und der verbesserten Schneeperformance den weiteren Vorteil einer verbesserten Manövrierfähigkeit auf.

Besonders vorteilhaft ist ein Laufstreifen mit den weiteren Merkmalen gemäß Anspruch 3.

Gemäß der vorteilhaften Ausführungsform des Laufstreifens ist der zweite Winkel 90°. D.h., der erste Längsabschnitt ist senkrecht zu der Längsrichtung des Laufstreifens angeordnet. Die senkrechte Ausrichtung des ersten Längsabschnitts führt zu einer maximalen Griffigkeit, die durch die Ausrichtung des ersten Längsabschnitts erreicht werden kann. D.h., im bestimmungsgemäßen Gebrauch des Laufstreifens mit einem Fahrzeugreifen führt die senkrechte Ausrichtung des ersten Längsabschnitts zu einer maximalen Griffigkeit des Fahrzeugreifens. Eine Änderung des zweiten Winkels zu einem kleineren Wert oder zu einem größeren Wert führt zu einer schwächeren Griffigkeit des Laufstreifens bzw. des Fahrzeugreifens.

Der vorteilhafte Laufstreifen mit dem Merkmal des zweiten Winkels gleich 90° weist in einem bestimmungsgemäßen Gebrauch mit einem Fahrzeugreifen neben der höheren Seitensteifigkeit und der verbesserten Schneeperformance den weiteren Vorteil einer verbesserten Griffigkeit auf.

Besonders vorteilhaft ist ein Laufstreifen mit den weiteren Merkmalen gemäß Anspruch 4.

Gemäß der vorteilhaften Ausführungsform des Laufstreifens schließen der zweite Längsabschnitt und die Längsrichtung des Laufstreifens einen dritten Winkel ein. Der dritte Winkel liegt zwischen -15° und 15° und insbesondere zwischen -10° und 10°.

Der vorteilhafte Laufstreifen mit dem Merkmal des dritten Winkels zwischen -15° und 15° weist in einem bestimmungsgemäßen Gebrauch mit einem Fahrzeugreifen neben der höheren Seitensteifigkeit, der verbesserten Griffigkeit und der verbesserten Schneeperformance in Längsrichtung des Laufstreifens den weiteren Vorteil einer Verbesserung der Schneeperformance in lateraler Richtung auf.

Besonders vorteilhaft ist ein Laufstreifen mit den weiteren Merkmalen gemäß Anspruch 5.

Gemäß der vorteilhaften Ausführungsform des Laufstreifens ist der dritte Winkel gleich 0°. Der zweite Längsabschnitt ist somit parallel zu der Längsrichtung des Laufstreifens angeordnet.

Der vorteilhafte Laufstreifen mit dem Merkmal des dritten Winkels von 0° weist in einem bestimmungsgemäßen Gebrauch mit einem Fahrzeugreifen neben der höheren Seitensteifigkeit, der verbesserten Griffigkeit und der verbesserten Schneeperformance in Längsrichtung des Laufstreifens den weiteren Vorteil einer weiteren Verbesserung der Schneeperformance in lateraler Richtung auf.

Besonders vorteilhaft ist ein Laufstreifen mit den weiteren Merkmalen gemäß Anspruch 6.

Gemäß der vorteilhaften Ausführungsform des Laufstreifens ist eine erste Länge des ersten Längsabschnitts größer als eine zweite Länge des zweiten Längsabschnitts, wobei der Vergleich entlang der Lauffläche des Laufstreifens erfolgt. D.h., im bestimmungsgemäßen Gebrauch des Laufstreifens mit einem Fahrzeugreifen weist ein Großteil der Zick-Zack-Form der Lamelle einen Winkel zwischen 80° und 100° zu einer Umlaufrichtung des Fahrzeugreifens bzw. einen Winkel zwischen -10° und 10° zu einer axialen Richtung des Fahrzeugreifens auf, wobei die axiale Richtung durch die Drehachse des Fahrzeugreifens definiert ist.

Der vorteilhafte Laufstreifen mit dem Merkmal des größeren ersten Längsabschnitts gegenüber dem zweiten Längsabschnitt weist in einem bestimmungsgemäßen Gebrauch mit einem Fahrzeugreifen neben der höheren Seitensteifigkeit und der verbesserten Griffigkeit die weiteren Vorteile einer weiteren Verbesserung der Schneeperformance und eines verbesserten Trockenbremsens auf.

Besonders vorteilhaft ist ein Laufstreifen mit den weiteren Merkmalen gemäß Anspruch 7.

Gemäß der vorteilhaften Ausführungsform des Laufstreifens ist eine erste Länge des ersten Längsabschnitts kleiner als eine zweite Länge des zweiten Längsabschnitts, wobei der Vergleich entlang der Lauffläche des Laufstreifens erfolgt. D.h., im bestimmungsgemäßen Gebrauch des Laufstreifens mit einem Fahrzeugreifen kann ein Großteil der Zick-Zack-Form der Lamelle einen Winkel zwischen -10° und 10° zu einer Umlaufrichtung des Fahrzeugreifens bzw. einen Winkel zwischen 80° und 100° zu einer axialen Richtung des Fahrzeugreifens aufweisen, wobei die axiale Richtung durch die Drehachse des Fahrzeugreifens definiert ist.

Der vorteilhafte Laufstreifen mit dem Merkmal des kleineren ersten Längsabschnitts gegenüber dem zweiten Längsabschnitt weist in einem bestimmungsgemäßen Gebrauch mit einem Fahrzeugreifen neben der höheren Seitensteifigkeit, der verbesserten Griffigkeit und der verbesserten Schneeperformance den weiteren Vorteil einer verbesserten Schneeseitenführung auf.

Besonders vorteilhaft ist ein Laufstreifen mit den weiteren Merkmalen gemäß Anspruch 8.

Gemäß der vorteilhaften Ausführungsform des Laufstreifens ist die Lamelle eine erste Lamelle. Der Profilblock weist mindestens eine zweite Lamelle auf. D.h., im bestimmungsgemäßen Gebrauch des Laufstreifens mit einem Fahrzeugreifen weist die zweite Lamelle eine radial außenliegende Öffnung auf, die sich beim Fahren je nach Fahrsituation schließen und wieder öffnen kann.

Der vorteilhafte Laufstreifen mit dem Merkmal der zweiten Lamelle weist in einem bestimmungsgemäßen Gebrauch mit einem Fahrzeugreifen neben der verbesserten Schneeperformance den weiteren Vorteil einer weiteren Erhöhung der Griffigkeit des Fahrzeugreifens bei Nässe und Eis auf.

Besonders vorteilhaft ist ein Laufstreifen mit den weiteren Merkmalen gemäß Anspruch 9.

Gemäß der vorteilhaften Ausführungsform des Laufstreifens ist der Profilblock ein erster Profilblock. Der Laufstreifen umfasst senkrecht zu der Längsrichtung des Laufstreifens mindestens einen zweiten Profilblock, wobei der erste Profilblock eine Anzahl an Lamellen aufweist, die sich von einer Anzahl an Lamellen des zweiten Profilblocks unterscheidet. D.h., im bestimmungsgemäßen Gebrauch des Laufstreifens mit einem Fahrzeugreifen liegen der erste Profilblock und der zweite Profilblock entlang einer axialen Richtung hintereinander, wobei die axiale Richtung durch die Drehachse des Fahrzeugreifens definiert ist. Der erste Profilblock kann beispielsweise eine einzelne Lamelle aufweisen, wohingegen der zweite Profilblock zwei Lamellen oder mehr aufweisen kann.

Der vorteilhafte Laufstreifen mit dem Merkmal des zweiten Profilblocks mit der unterschiedlichen Anzahl an Lamellen weist in einem bestimmungsgemäßen Gebrauch mit einem Fahrzeugreifen neben der höheren Seitensteifigkeit und der verbesserten Schneeperformance den weiteren Vorteil einer weiteren Erhöhung der Griffigkeit des Fahrzeugreifens sowohl bei nassen Verhältnissen als auch bei Schneeverhältnissen auf.

Erfindungsgemäß ist ein Fahrzeugreifen mit den Merkmalen gemäß nebengeordnetem Anspruch 10 offenbart. Der erfindungsgemäße Fahrzeugreifen umfasst hierbei einen erfindungsgemäßen Laufstreifen.

Der erfindungsgemäße Fahrzeugreifen weist eine höhere Seitensteifigkeit, eine verbesserte Griffigkeit und eine verbesserte Schneeperformance auf.

Weitere Merkmale, Vorteile und Einzelheiten der Erfindung werden nun anhand der Zeichnungen näher beschrieben.

Die Figur 1 zeigt eine erste vorteilhafte Ausführungsform eines Laufstreifens mit einer eine Zick-Zack-Form aufweisenden Lamelle.

Die Figur 2 zeigt eine weitere vorteilhafte Ausführungsform eines Laufstreifens mit einer eine Zick-Zack-Form aufweisenden Lamelle, wobei der erste Winkel ein spitzer Winkel ist.

Die Figur 3 zeigt eine weitere vorteilhafte Ausführungsform eines Laufstreifens mit einer eine Zick-Zack-Form aufweisenden Lamelle, wobei der erste Längsabschnitt größer ist als der zweite Längsabschnitt.

Die Figur 4 zeigt eine weitere vorteilhafte Ausführungsform eines Laufstreifens mit einer eine Zick-Zack-Form aufweisenden Lamelle, wobei der erste Längsabschnitt kleiner ist als der zweite Längsabschnitt.

Die Figur 5 zeigt eine weitere vorteilhafte Ausführungsform eines Laufstreifens mit zwei jeweils eine Zick-Zack-Form aufweisenden Lamellen.

Die Figur 6 zeigt eine weitere vorteilhafte Ausführungsform eines Laufstreifens in einem Längsschnitt.

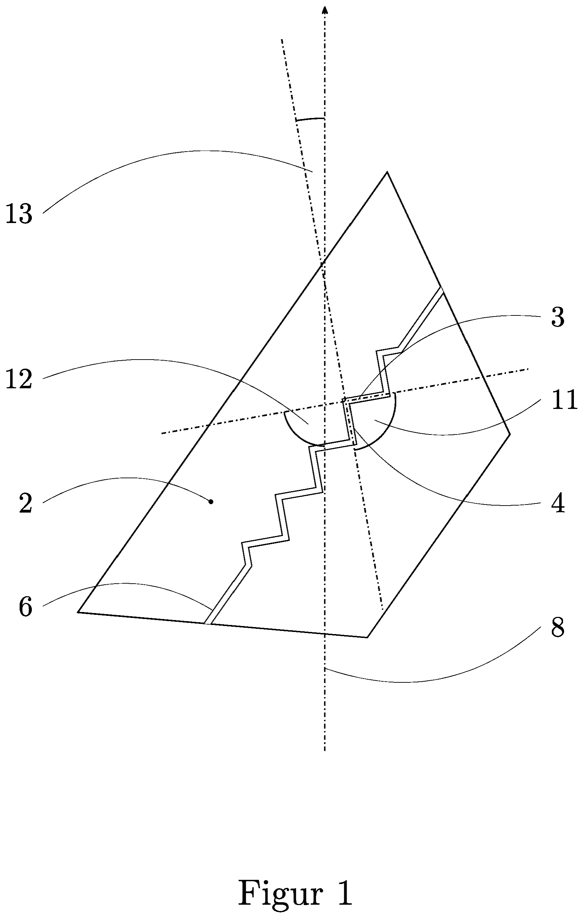

Die Figuren 1 bis 5 zeigen vorteilhafte Ausführungsformen eines Laufstreifens mit einer Lauffläche 1. Die Lauffläche 1 weist ein Reifenprofil auf, welches mindestens einen Profilblock 2 umfasst.

Der jeweilige Profilblock 2 in den Figuren 1 bis 5 weist vier Profilblockkanten und eine Lamelle 6 auf. Die vier Profilblockkanten bilden eine Trapezform. Die Lamelle 6 mündet in zwei der vier Profilblockkanten, wobei die zwei Profilblockkanten gegenüberliegend angeordnet und nicht parallel zueinander ausgerichtet sind. Ferner ist die Lamelle 6 parallel zu den zwei Profilblockkanten ausgerichtet, in die die Lamelle 6 nicht mündet. D.h., die zwei Profilblockkanten sowie die Lamelle sind zueinander parallel ausgerichtet.

Die Lamelle 6 weist eine Zick-Zack-Form auf. D.h., die Lamelle 6 weist eine Anzahl an Zick-Zacken auf, die verbunden einen Teil der Lamelle 6 bilden. Jeder Zick-Zack umfasst einen ersten Längsabschnitt 3 und einen zweiten Längsabschnitt 4.

Der erste Längsabschnitt 3 und der zweite Längsabschnitt 4 schließen einen ersten Winkel 11 ein. Der erste Längsabschnitt 3 weist zudem einen zweiten Winkel 12 zu einer Längsrichtung 8 des Laufstreifens auf. Der zweite Längsabschnitt 4 weist ebenfalls einen Winkel, einen dritten Winkel 13, zu der Längsrichtung 8 des Laufstreifens auf. D.h., in einem bestimmungsgemäßen Gebrauch des Laufstreifens mit einem Fahrzeugreifen weist der erste Längsabschnitt 3 den zweiten Winkel 12 zu einer Umlaufrichtung des Fahrzeugreifens auf, wohingegen der zweite Längsabschnitt 4 den dritten Winkel 12 zu der Umlaufrichtung des Fahrzeugreifens aufweist.

In der Ausführungsform des vorteilhaften Laufstreifens der Figur 1 ist der erste Winkel 11 90°. D.h. der erste Längsabschnitt 3 und der zweite Längsabschnitt 4 sind senkrecht zueinander angeordnet, wobei der erste Längsabschnitt 3 und der zweite Längsabschnitt 4 die gleiche Länge aufweisen. Zudem bilden angrenzende Zick-Zacken ebenfalls einen rechten Winkel. Der zweite Winkel 12 ist 80°. D.h., der erste Längsabschnitt 3 und die Längsrichtung 8 schließen einen spitzen Winkel ein. D.h. zudem, in einem bestimmungsgemäßen Gebrauch des Laufstreifens mit einem Fahrzeugreifen weist der erste Längsabschnitt 3 einen zweiten Winkel 12 von 80° gegenüber einer Umlaufrichtung des Fahrzeugreifens auf bzw. der erste Längsabschnitt 3 weist einen Winkel von 10° gegenüber einer axialen Richtung des Fahrzeugreifens auf, wobei die axiale Richtung durch die Drehachse definiert ist. Der dritte Winkel 13 ist 10°. D.h., der zweite Längsabschnitt 4 und die Längsrichtung 8 schließen ebenfalls einen spitzen Winkel ein. D.h. zudem, in einem bestimmungsgemäßen Gebrauch des Laufstreifens mit einem Fahrzeugreifen weist der zweite Längsabschnitt 4 einen dritten Winkel 13 von 10° gegenüber der Umlaufrichtung des Fahrzeugreifens auf bzw. der zweite Längsabschnitt 4 weist einen Winkel von 80° gegenüber der axialen Richtung des Fahrzeugreifens auf, die durch die Drehachse definiert ist.

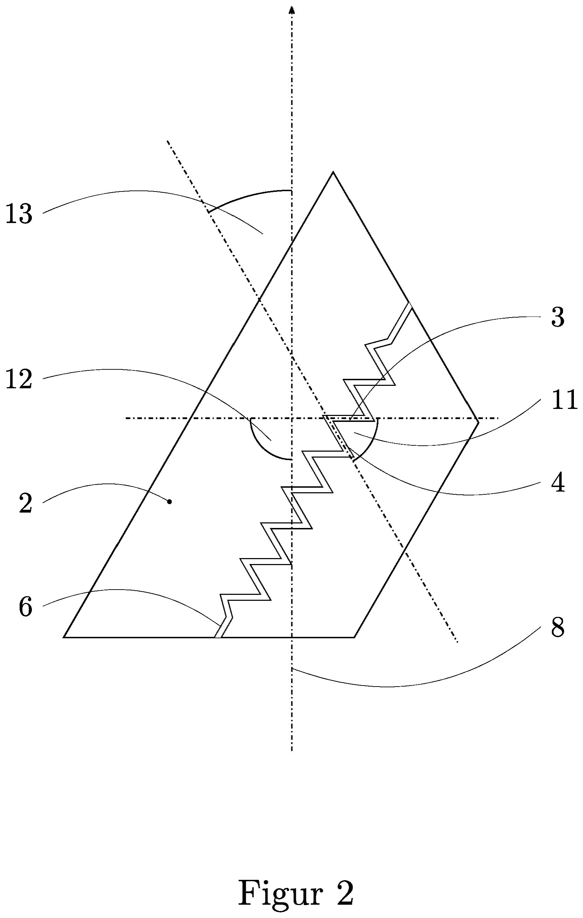

In der Ausführungsform des vorteilhaften Laufstreifens der Figur 2 ist der erste Winkel 11 60°. D.h., der erste Längsabschnitt 3 und der zweite Längsabschnitt 4 bilden zueinander einen spitzen Winkel, wobei der erste Längsabschnitt 3 und der zweite Längsabschnitt 4 die gleiche Länge aufweisen. Zudem bilden angrenzende Zick-Zacken ebenfalls einen spitzen Winkel von 60°. Der zweite Winkel 12 ist 90°. D.h., der erste Längsabschnitt 3 und die Längsrichtung 8 sind senkrecht zueinander angeordnet. D.h. zudem, in einem bestimmungsgemäßen Gebrauch des Laufstreifens mit einem Fahrzeugreifen ist der erste Längsabschnitt 3 zu einer Umlaufrichtung des Fahrzeugreifens senkrecht angeordnet bzw. der erste Längsabschnitt 3 ist zu einer axialen Richtung des Fahrzeugreifens parallel angeordnet, wobei die axiale Richtung durch die Drehachse definiert ist. Der dritte Winkel 13 ist 30°. D.h., der zweite Längsabschnitt 4 und die Längsrichtung 8 schließen einen spitzen Winkel ein. D.h. zudem, in einem bestimmungsgemäßen Gebrauch des Laufstreifens mit einem Fahrzeugreifen weist der zweite Längsabschnitt 4 einen dritten Winkel 13 von 30° gegenüber der Umlaufrichtung des Fahrzeugreifens auf bzw. der zweite Längsabschnitt 4 weist einen Winkel von 60° gegenüber der axialen Richtung des Fahrzeugreifens auf, die durch die Drehachse definiert ist.

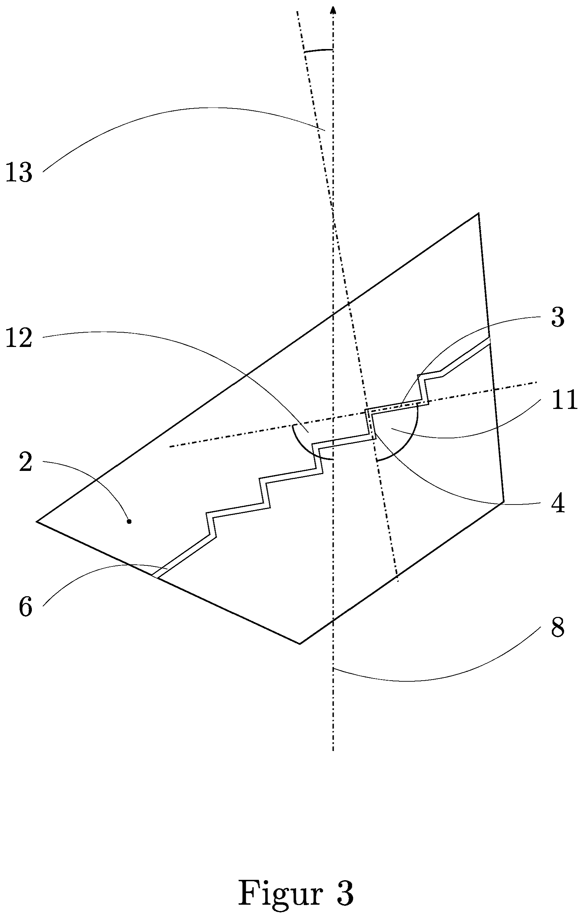

In der Ausführungsform des vorteilhaften Laufstreifens der Figur 3 ist der erste Winkel 11 90°. D.h., der erste Längsabschnitt 3 und der zweite Längsabschnitt 4 sind senkrecht zueinander angeordnet. Der erste Längsabschnitt 3 und der zweite Längsabschnitt 4 weisen jedoch eine unterschiedliche Länge auf, wobei der erste Längsabschnitt 3 gegenüber dem zweiten Längsabschnitt 4 länger ist. In der Figur 3 ist der erste Längsabschnitt 3 mindestens zweimal so lang wie der zweite Längsabschnitt 4. Zudem bilden angrenzende Zick-Zacken ebenfalls einen rechten Winkel. Der zweite Winkel 12 ist 80°. D.h., der erste Längsabschnitt 3 und die Längsrichtung 8 schließen einen spitzen Winkel ein. D.h. zudem, in einem bestimmungsgemäßen Gebrauch des Laufstreifens mit einem Fahrzeugreifen weist der erste Längsabschnitt 3 einen zweiten Winkel 12 von 80° gegenüber einer Umlaufrichtung des Fahrzeugreifens auf bzw. der erste Längsabschnitt 3 weist einen Winkel von 10° gegenüber einer axialen Richtung des Fahrzeugreifens auf, wobei die axiale Richtung durch die Drehachse definiert ist. Der dritte Winkel 13 ist 10°. D.h., der zweite Längsabschnitt 4 und die Längsrichtung 8 schließen ebenfalls einen spitzen Winkel ein. D.h. zudem, in einem bestimmungsgemäßen Gebrauch des Laufstreifens mit einem Fahrzeugreifen weist der zweite Längsabschnitt 4 einen dritten Winkel 13 von 10° gegenüber der Umlaufrichtung des Fahrzeugreifens auf bzw. der zweite Längsabschnitt 4 weist einen Winkel von 80° gegenüber der axialen Richtung des Fahrzeugreifens auf, die durch die Drehachse definiert ist.

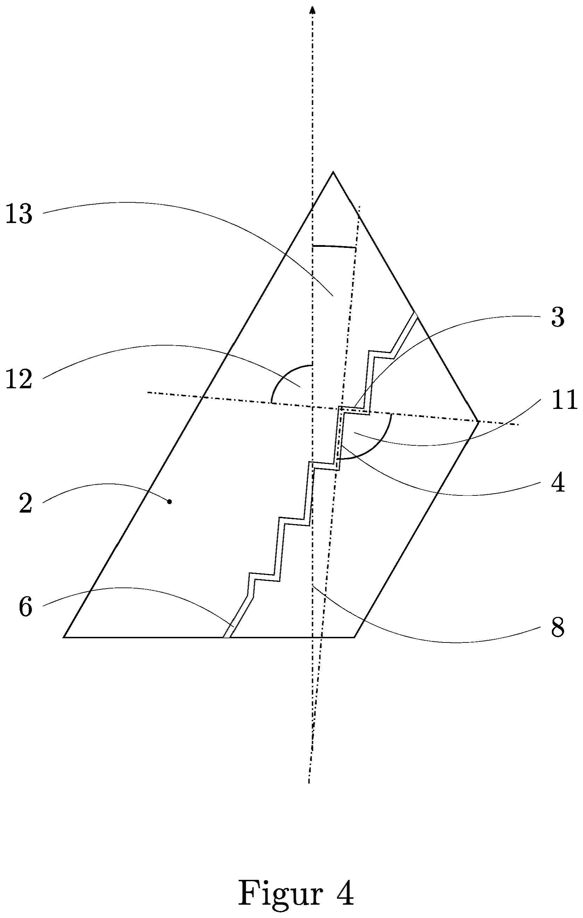

In der Ausführungsform des vorteilhaften Laufstreifens der Figur 4 ist der erste Winkel 11 90°. D.h., der erste Längsabschnitt 3 und der zweite Längsabschnitt 4 sind senkrecht zueinander angeordnet. Der erste Längsabschnitt 3 und der zweite Längsabschnitt 4 weisen jedoch eine unterschiedliche Länge auf, wobei der erste Längsabschnitt 3 gegenüber dem zweiten Längsabschnitt 4 kürzer ist. In der Figur 4 ist der zweite Längsabschnitt 4 mindestens zweimal so lang wie der erste Längsabschnitt 3. Zudem bilden angrenzende Zick-Zacken ebenfalls einen rechten Winkel. Der zweite Winkel 12 ist 85°. D.h., der erste Längsabschnitt 3 und die Längsrichtung 8 schließen einen spitzen Winkel ein. D.h. zudem, in einem bestimmungsgemäßen Gebrauch des Laufstreifens mit einem Fahrzeugreifen weist der erste Längsabschnitt 3 einen zweiten Winkel 12 von 85° gegenüber einer Umlaufrichtung des Fahrzeugreifens auf bzw. der erste Längsabschnitt 3 weist einen Winkel von 5° gegenüber einer axialen Richtung des Fahrzeugreifens auf, wobei die axiale Richtung durch die Drehachse definiert ist. Der dritte Winkel 13 ist 5°. D.h., der zweite Längsabschnitt 4 und die Längsrichtung 8 schließen ebenfalls einen spitzen Winkel ein. D.h. zudem, in einem bestimmungsgemäßen Gebrauch des Laufstreifens mit einem Fahrzeugreifen weist der zweite Längsabschnitt 4 einen dritten Winkel 13 von 5° gegenüber der Umlaufrichtung des Fahrzeugreifens auf bzw. der zweite Längsabschnitt 4 weist einen Winkel von 85° gegenüber der axialen Richtung des Fahrzeugreifens auf, die durch die Drehachse definiert ist.

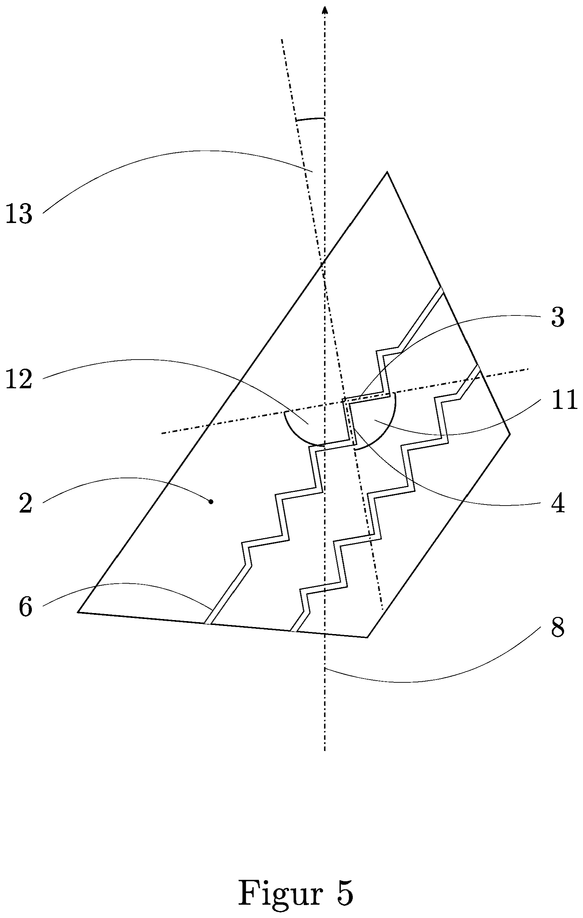

In der Ausführungsform des vorteilhaften Laufstreifens der Figur 5 ist eine erste Lamelle 6 und eine zweite Lamelle 7 dargestellt, wodurch die Griffigkeit des Fahrzeugreifens weiter erhöht wird. Die erste Lamelle 6 und die zweite Lamelle 7 sind parallel zueinander angeordnet. Die zweite Lamelle 7 mündet ebenfalls in die zwei Profilblockkanten, in die die erste Lamelle mündet. Ferner ist durch die parallele Ausrichtung zu der ersten Lamelle 6 die zweite Lamelle 7 ebenfalls parallel zu den zwei Profilblockkanten ausgerichtet, in die die zweite Lamelle 7 nicht mündet. Die zweite Lamelle 7 weist wie die erste Lamelle 6 eine Zick-Zack-Form auf. D.h., die zweite Lamelle 7 weist eine Anzahl an Zick-Zacken auf, die verbunden einen Teil der zweiten Lamelle 7 bilden, wobei jeder Zick-Zack ebenfalls einen ersten Längsabschnitt 3 und einen zweiten Längsabschnitt 4 umfasst.

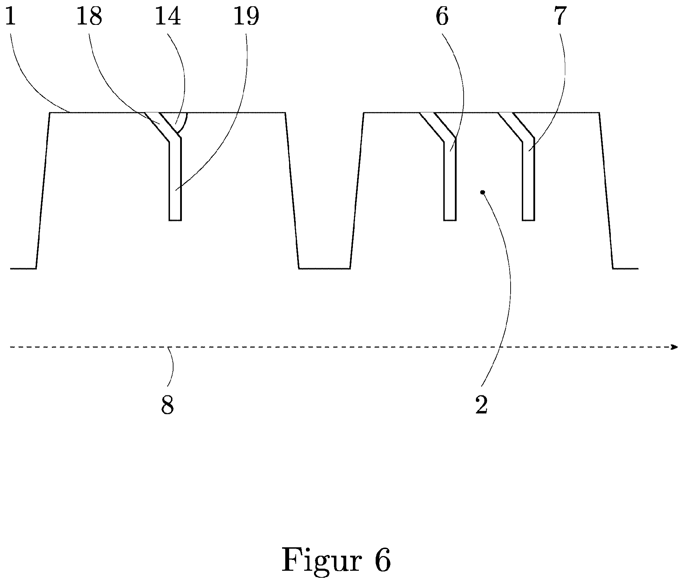

In der Figur 6 ist ein weiterer vorteilhafter Laufstreifen dargestellt. Im Gegensatz zu den Figuren 1 bis 5 ist in der Figur 6 der vorteilhafte Laufstreifen in einem Längsschnitt gezeigt, wobei der Längsschnitt entlang einer Längsrichtung 8 des Laufstreifens verläuft. Der vorteilhafte Laufstreifen umfasst eine Lauffläche 1, die ein Reifenprofil aufweist. In der Figur 6 weist das Reifenprofil mindestens zwei Profilblöcke auf. Ein erster Profilblock 2 umfasst eine erste Lamelle 6 und eine zweite Lamelle 7. Die erste Lamelle 6 und die zweite Lamelle 7 sind entlang der Lauffläche 1 parallel ausgerichtet. Senkrecht zu der Lauffläche 1 sind sowohl die erste Lamelle 6 als auch die zweite Lamelle 7 jeweils in einen ersten Tiefenabschnitt 18 und in einen zweiten Tiefenabschnitt 19 unterteilt. Sowohl der zweite Tiefenabschnitt 19 der ersten Lamelle 6 als auch der zweite Tiefenabschnitt 19 der zweiten Lamelle 7 erstrecken sich senkrecht in Richtung der Lauffläche 1 jeweils von einem Lamellengrund. Der erste Tiefenabschnitt 18 der ersten Lamelle 6 verbindet den zweiten Tiefenabschnitt 19 der ersten Lamelle 6 mit der Lauffläche 1, wobei der erste Tiefenabschnitt 18 sowohl einen Winkel zwischen 0° und 90° zu der Lauffläche 1 als auch einen Winkel zwischen 0° und 90° zu dem zweiten Tiefenabschnitt 19 aufweist. Der erste Tiefenabschnitt 18 der zweiten Lamelle 7 verbindet den zweiten Tiefenabschnitt 19 der zweiten Lamelle 7 mit der Lauffläche 1, wobei der erste Tiefenabschnitt 18 sowohl einen Winkel zwischen 0° und 90° zu der Lauffläche 1 als auch einen Winkel zwischen 0° und 90° zu dem zweiten Tiefenabschnitt 19 aufweist.

### Bezugszeichenliste

1- Lauffläche
2 - Profilblock
3 - erster Längsabschnitt
4 - zweiter Längsabschnitt
6 - Lamelle / erste Lamelle
7 - zweite Lamelle
8 - Längsrichtung
11 - erster Winkel
12 - zweiter Winkel
13 - dritter Winkel
14 - vierter Winkel
18 - erster Tiefenabschnitt
19 - zweiter Tiefenabschnitt

## Patentansprüche

1. Laufstreifen für einen Fahrzeugreifen, umfassend
mindestens einen von einer Lauffläche (1) begrenzten Profilblock (2), der eine Lamelle (6) umfasst,
wobei entlang der Lauffläche (1) die Lamelle (6) eine Zick-Zack-Form aufweist und jeder Zick-Zack der Zick-Zack-Form einen ersten Längsabschnitt (3) und einen zweiten Längsabschnitt (4) umfasst,
wobei der erste Längsabschnitt (3) und der zweite Längsabschnitt (4) einen ersten Winkel (11) kleiner 120° einschließen,
wobei der erste Längsabschnitt (3) und eine Längsrichtung (8) des Laufstreifens einen zweiten Winkel (12) zwischen 80° und 100° einschließen,
**dadurch gekennzeichnet, dass**
die Lamelle (6) sich in einem Tiefenabschnitt (18) unter einem vierten Winkel (14) kleiner 90° von der Lauffläche (1) in den Profilblock (2) erstreckt.

2. Laufstreifen nach Anspruch 1, **dadurch gekennzeichnet,**
**dass** der erste Winkel (11) 90° ist.

3. Laufstreifen nach einem der vorhergehenden Ansprüche, **dadurch gekennzeichnet,**
**dass** der zweite Winkel (12) 90° ist.

4. Laufstreifen nach nach einem der vorhergehenden Ansprüche, **dadurch gekennzeichnet,**
**dass** der zweite Längsabschnitt (4) und die Längsrichtung (8) des Laufstreifens einen dritten Winkel (13) zwischen -15° und 15°, insbesondere einen dritten Winkel (13) zwischen -10° und 10°, einschließen.

5. Laufstreifen nach Anspruch 4, **dadurch gekennzeichnet,**
**dass** der dritte Winkel (13) 0° ist.

6. Laufstreifen nach einem der Ansprüche 1 bis 5, **dadurch gekennzeichnet,**
**dass** entlang der Lauffläche (1) eine erste Länge des ersten Längsabschnitts (3) größer ist als eine zweite Länge des zweiten Längsabschnitts (4).

7. Laufstreifen nach einem der Ansprüche 1 bis 5, **dadurch gekennzeichnet,**
**dass** entlang der Lauffläche (1) eine erste Länge des ersten Längsabschnitts (3) kleiner ist als eine zweite Länge des zweiten Längsabschnitts (4).

8. Laufstreifen nach einem der vorhergehenden Ansprüche, **dadurch gekennzeichnet,**
**dass** die Lamelle eine erste Lamelle (6) ist und der Profilblock (2) eine zweite Lamelle (7) umfasst, die parallel zu der ersten Lamelle (6) angeordnet ist.

9. Laufstreifen nach einem der vorhergehenden Ansprüche, **dadurch gekennzeichnet,**
**dass** der Profilblock ein erster Profilblock (2) ist und der Laufstreifen senkrecht zu der Längsrichtung (8) des Laufstreifens mindestens einen zweiten Profilblock aufweist, wobei
der erste Profilblock (2) eine Anzahl an Lamellen (6, 7) aufweist, die sich von einer Anzahl
an Lamellen des zweiten Profilblocks unterscheidet.

10. Fahrzeugreifen, umfassend einen Laufstreifen nach einem der Ansprüche 1 bis 9, wobei ein Tiefenabschnitt (18) des Laufstreifens in einer Laufrichtung des Fahrzeugreifens geneigt ist.
